(19) Europäisches Patentamt
European Patent Office
Office européen des brevets

(11) **EP 4 307 759 A1**

(12) **EUROPEAN PATENT APPLICATION**
published in accordance with Art. 153(4) EPC

(43) Date of publication:
**17.01.2024 Bulletin 2024/03**

(21) Application number: **22766644.3**

(22) Date of filing: **25.01.2022**

(51) International Patent Classification (IPC):
**H04W 24/10** (2009.01)       **H04W 92/20** (2009.01)
**H04W 28/16** (2009.01)       **H04W 84/12** (2009.01)

(52) Cooperative Patent Classification (CPC):
**H04W 24/02; H04W 24/10; H04W 28/16;**
**H04W 92/20;** H04W 84/12

(86) International application number:
**PCT/JP2022/002519**

(87) International publication number:
**WO 2022/190677 (15.09.2022 Gazette 2022/37)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **12.03.2021   JP 2021040223**

(71) Applicant: **Panasonic Intellectual Property**
**Corporation**
**of America**
**Torrance, CA 90504 (US)**

(72) Inventors:
• **KANAYA, Hiroyuki**
**Kadoma-shi**
**Osaka 571-0057 (JP)**

• **URABE, Yoshio**
**Kadoma-shi**
**Osaka 571-0057 (JP)**
• **IWAI, Takashi**
**Kadoma-shi**
**Osaka 571-0057 (JP)**
• **TAKATA, Tomofumi**
**Kadoma-shi**
**Osaka 571-0057 (JP)**
• **MIURA, Taichi**
**Kadoma-shi**
**Osaka 571-0057 (JP)**

(74) Representative: **Grünecker Patent- und**
**Rechtsanwälte**
**PartG mbB**
**Leopoldstraße 4**
**80802 München (DE)**

(54) **TERMINAL, ACCESS POINT, AND COMMUNICATION METHOD**

(57)   This terminal comprises: a circuit that measures received quality on the basis of a signal from at least one among a second access point differing from a first access point serving as a connection destination, and another terminal connected to the second access point; and a transmission circuit that transmits information regarding the received quality to the first access point.

FIG. 20

**Description**

Technical Field

The present disclosure relates to a terminal, an access point, and a communication method.

Background Art

The technical specification of the Institute of Electrical and Electronics Engineers (IEEE) 802.11be (hereinafter, referred to as "11be") has been developed as the successor standard of 802.11ax (hereinafter, referred to as "11ax"), which is a standard of IEEE 802.11.
In 11be, application of coordinated communication has been discussed.

Citation List

Non-Patent Literature

NPL 1
IEEE 802.11-19/1129r2, Consideration on Multi-AP Coordination, 2019-09-06
NPL 2
IEEE 802.11-19/0103r1, AP Coordination in EHT, 2019-03-11
NPL 3
IEEE Std 802.11-2016, December 2016
NPL 4
IEEE 802.11-19/1262r8, Specification Framework for TGbe, 2020-02-11

Summary of Invention

However, a setting method of coordinated communication has not been sufficiently discussed. For example, an effect of interference caused to a terminal possibly varies depending on the position of the terminal with respect to a plurality of access points. Thus, there is scope for further discussion on that an appropriate communication setting between a plurality of access points and a terminal possibly varies.
One non-limiting and exemplary embodiment of the present disclosure facilitates providing a terminal, an access point, and a communication method each capable of appropriately setting communication between a plurality of access points and a terminal.
A terminal according to an embodiment of the present disclosure includes: control circuitry, which, in operation, measures received quality based on a signal from at least one of a certain access point different from a first access point of a connection destination and referred to as a second access point, and/or a terminal connected to the second access point; and transmission circuitry, which, in operation, transmits information on the received quality to the first access point.
It should be noted that a general or specific embodiment may be implemented as a system, an apparatus, a method, an integrated circuit, a computer program, a storage medium, or any selective combination thereof.
According to an embodiment of the present disclosure, it is possible to appropriately set communication between a plurality of access points and a terminal.
Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an exemplary operation of coordinated communication;
FIG. 2 illustrates an exemplary combination of Coordinated Orthogonal Frequency Division Multiple Access (C-OFDMA) and Coordinated spatial reuse (C-SR);
FIG. 3 illustrates an exemplary format of an Element frame;

FIG. 4 illustrates exemplary Element IDs;

FIG. 5 illustrates an exemplary format of Measurement Request;

FIG. 6 illustrates exemplary Measurement types of the Measurement Request;

FIG. 7 illustrates an exemplary format of Beacon request;

FIG. 8 illustrates exemplary Optional Subelements of the Beacon request;

FIG. 9 illustrates an exemplary format of Beacon reporting;

FIG. 10 illustrates an exemplary format of Measurement Report;

FIG. 11 illustrates exemplary Measurement types of the Measurement Report;

FIG. 12 illustrates an exemplary format of Beacon report;

FIG. 13 illustrates exemplary Optional Subelements of the Beacon report;

FIG. 14 illustrates an exemplary format of an Extream High Throughput (EHT) preamble;

FIG. 15 is a block diagram illustrating an exemplary configuration of a part of an access point (AP: Access Point);

FIG. 16 is a block diagram illustrating an exemplary configuration of a part of a terminal (STA: Station);

FIG. 17 is a block diagram illustrating an exemplary configuration of the AP;

FIG. 18 is a block diagram illustrating an exemplary configuration of a terminal;

FIG. 19 illustrates an exemplary configuration of a radio communication system according to Embodiment 1;

FIG. 20 is a sequence diagram illustrating an exemplary operation according to Embodiment 1;

FIG. 21 illustrates an exemplary format of Multi-AP Measurement Request according to Embodiment 1;

FIG. 22 illustrates an exemplary format of Multi AP Request subelement according to Embodiment 1;

FIG. 23 illustrates an exemplary format of Multi-AP Measurement Report according to Embodiment 1;

FIG. 24 illustrates an exemplary format of Multi AP Report subelement according to Embodiment 1;

FIG. 25 is a sequence diagram illustrating another exemplary operation according to Embodiment 1;

FIG. 26 illustrates an exemplary configuration of a radio communication system according to Embodiment 2;

FIG. 27 is a sequence diagram illustrating an exemplary operation according to Embodiment 2;

FIG. 28 illustrates an exemplary format of Multi AP Discovery report according to Embodiment 2; and

FIG. 29 illustrates an exemplary format of Multi AP Discovery request according to Embodiment 2.

Description of Embodiments

Hereinafter, embodiments of the present disclosure will be described in detail with reference to the accompanying drawings.

[Coordinated Communication]

In 11be, for example, application of Multi-AP (hereinafter, referred to as "MAP") coordination (hereinafter, referred to as "coordinated communication") has been discussed, in which a plurality of access points (also referred to as a "base station", hereinafter, referred to as an AP) cooperates with each other to perform data transmission and reception between the plurality of APs and a plurality of terminals (also referred to as a "non-AP station (STA)", hereinafter, referred to as "STA").

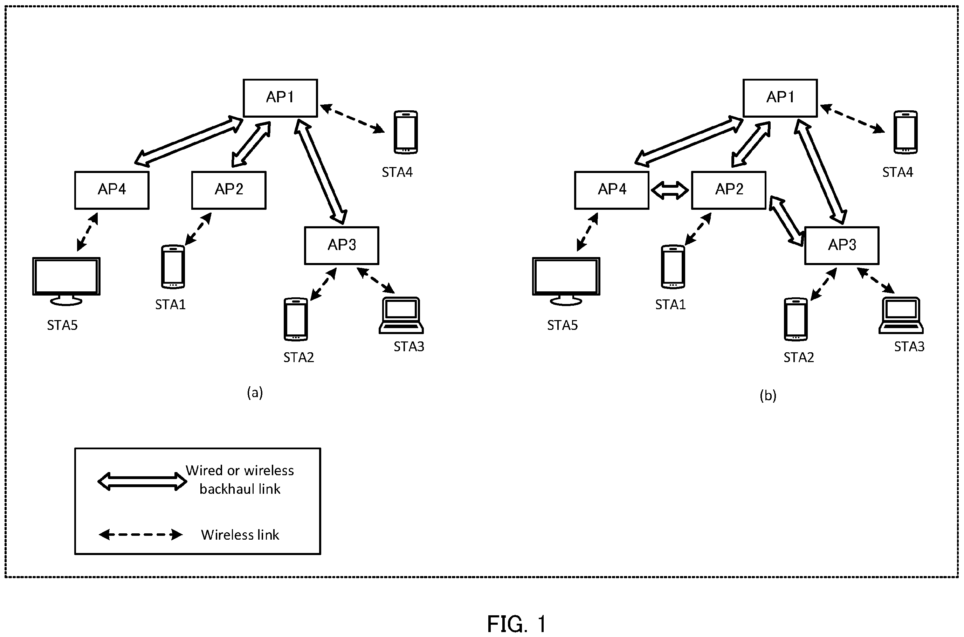

Methods for forwarding data between a plurality of APs performing coordinated communication include, for example, a method using a wireless backhaul and a method using a wired backhaul. Further, methods for controlling coordinated communication include, for example, a method in which one AP (AP 1 in FIG. 1) controls the coordinated communication as illustrated in FIG. 1 (a), and a method in which an AP (any of AP 1 to AP 4 in FIG. 1) controlling coordinated communication changes as illustrated in FIG. 1 (b) (e.g., see Non-Patent Literature (hereinafter, referred to as NPL) 1).

Furthermore, coordination schemes (e.g., also referred to as MAP Type) of coordinated communication include Coordinated Orthogonal Frequency Division Multiple Access (hereinafter, referred to as "C-OFDMA") in which a plurality of APs transmits and receives signals using frequency bands (e.g., resource units (RUs)) different from one another, and Coordinated spatial reuse (hereinafter, referred to as "CSR") in which a plurality of APs transmits and receives signals using the same frequency band. In addition, coordinated communication in which C-OFDMA and CSR are combined has been discussed (e.g., NPL 2).

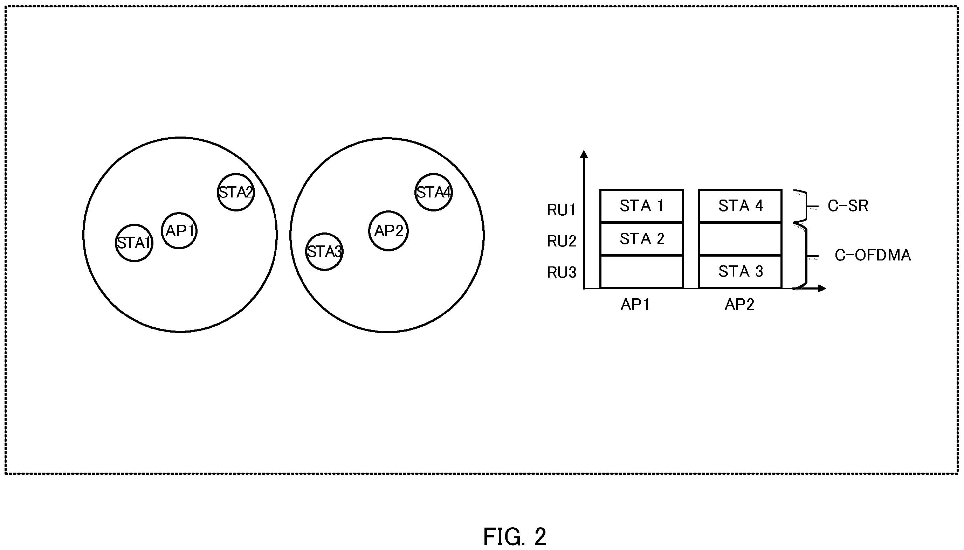

FIG. 2 illustrates an exemplary operation of coordinated communication in which C-OFDMA and CSR are combined. In the example illustrated in FIG. 2, AP 1 and AP 2 perform transmission and reception to and from STA 2 and STA 3, respectively, by C-OFDMA (e.g., transmission and reception in RU 2 and RU 3), and performs transmission and reception to and from STA 1 and STA 4, respectively, by CSR (e.g., transmission and reception in RU 1).

Note that, in addition to C-OFDMA and CSR, the coordination schemes include Joint Transmissions (hereinafter, referred to as JT) in which a plurality of APs simultaneously transmits and receives data for an STA, and Coordinated Beamforming (hereinafter, referred to as CBF) that reduces interference with a coordination destination in a plurality of APs.

Further, for example, a method for measuring received quality of a received signal in an STA is defined in IEEE 802.11 specification (e.g., see NPL 3).

For example, in coordinated communication, it is assumed that a plurality of APs sets (or configures) coordinated communication (e.g., also referred to as coordination construction, a Multi-AP setup, or a setup) such as setting a coordination scheme or a frequency band used for the coordinated communication, based on the received quality in an STA.

However, a method for setting up the coordinated communication has not been sufficiently discussed. Thus, in a non-limiting example of the present disclosure, a method for enhancing the efficiency of the setup of the coordinated communication will be described.

(Embodiment 1)

In an embodiment of the present disclosure, an example will be described in which at least two APs are placed and coordinated communication is set up based on a measurement result of received quality in an STA.

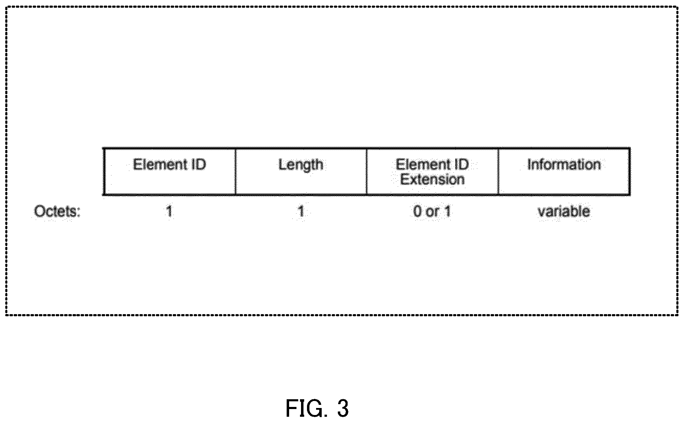

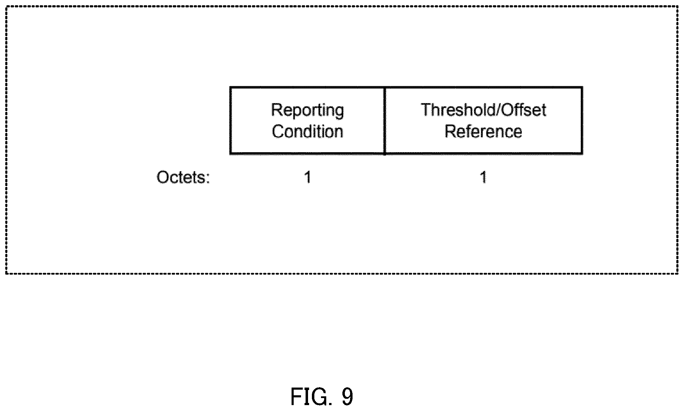

The measurement of the received quality in the STA may be performed based on IEEE 802.11 specification, for example. For example, IEEE 802.11, defines "Element" as a format for performing transmission and reception between an AP and an STA. FIG. 3 illustrates an exemplary format of the Element (e.g., see Figure 9-122 in NPL 3). As illustrated in FIG. 3, the Element may include, for example, information identifying a type of the Element (e.g., "Element ID").

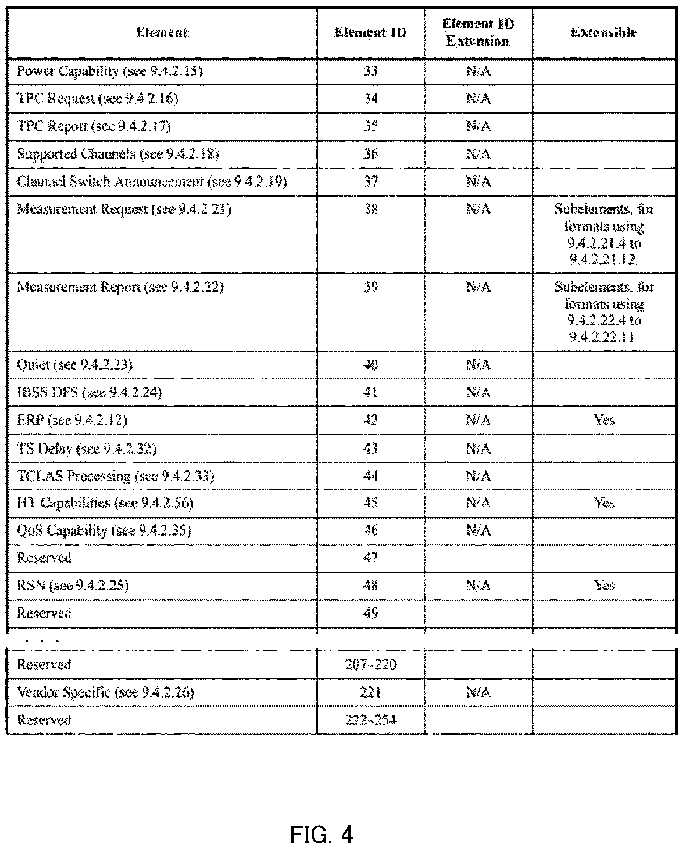

FIG. 4 illustrates exemplary information (e.g., information in a table format) set in the "Element ID" in the Element format illustrated in FIG. 3 (e.g., see Table 9-77 in NPL 3). In FIG. 4, for example, in a case of "Measurement Request" (Element ID = 38), information on a request for measurement of received quality requested from an AP to an STA may be set in the Element. Further, in FIG. 4, for example, in a case of "Measurement Report" (Element ID = 39), information on a report on the measurement of the received quality from the STA to the AP may be set in the Element.

[Measurement Request of Received quality]

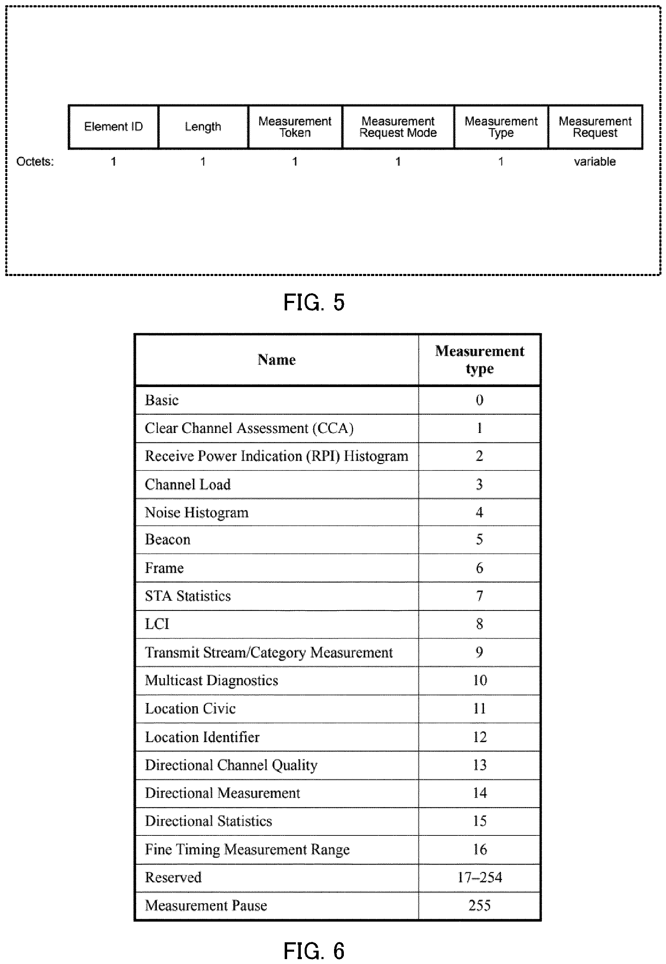

FIG. 5 illustrates an exemplary format of the Measurement Request (Element ID = 38) (Measurement Request element format) illustrated in FIG. 4 (e.g., see Figure 9-147 in NPL 3). As illustrated in FIG. 5, the format of the Measurement Request may include, for example, information indicating a type of the measurement (e.g., "Measurement Type").

FIG. 6 illustrates exemplary information (e.g., information in a table format) set (or defined) in the "Measurement Type" in the Measurement Request format illustrated in FIG. 5 (e.g., see Table 9-82 in NPL 3). As illustrated in FIG. 6, in the Measurement Type, information "Beacon (or Beacon request)" (e.g., Measurement Type = 5) requesting measurement of received quality with a beacon may be set.

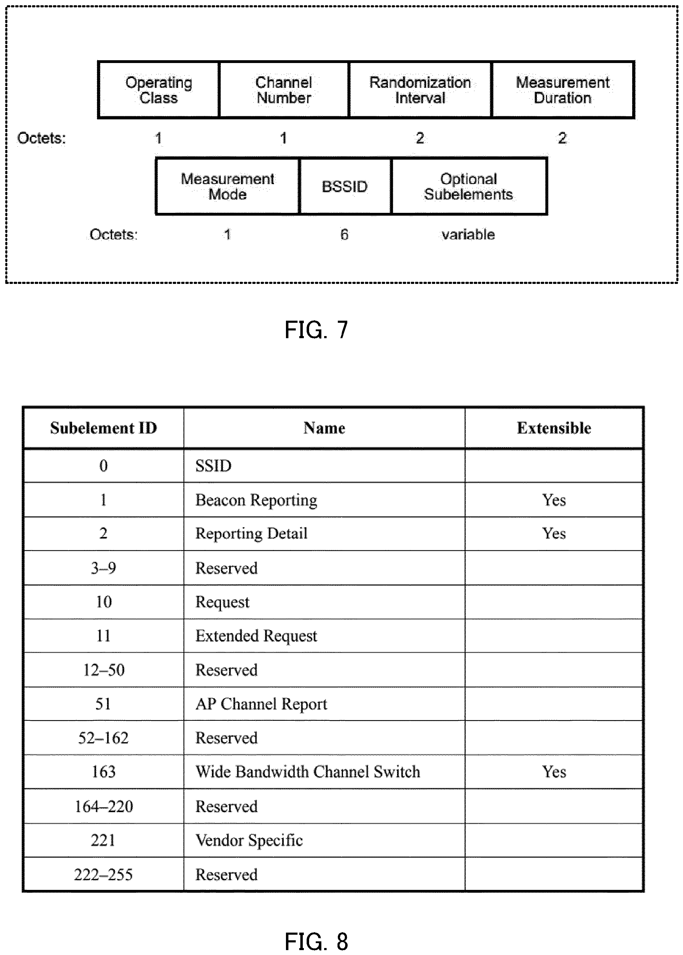

FIG. 7 illustrates an exemplary format of the Measurement Request field illustrated in FIG. 5 for the Beacon Request (Measurement Type = 5) illustrated in FIG. 6 (e.g., see Figure 9-156 in NPL 3).

For example, the AP may request the STA to perform beacon measurement on a Basic Service Set (BSS) of ID indicated by "BSSID" in a frequency band specified by "Operating Class" and "Channel Number" in the format illustrated in FIG. 7.

Further, "Optional Subelements" illustrated in FIG. 7 may specify additional information (e.g., subelement), for example. FIG. 8 illustrates exemplary information (e.g., information in a table format) set in the Optional Subelements illustrated in FIG. 7 (e.g., see Table 9-88 in NPL 3). For example, Beacon Reporting subelement (ID = 1) may specify a beacon-detection threshold value. FIG. 9 illustrates an exemplary format of the Beacon Reporting (Subelement ID = 1). For example, in a "Threshold/Offset Reference" subfield illustrated in FIG. 9, a threshold value (e.g., a detection threshold value) or an offset value related to the report on the measurement result with a beacon may be specified.

[Measurement Report of Received quality]

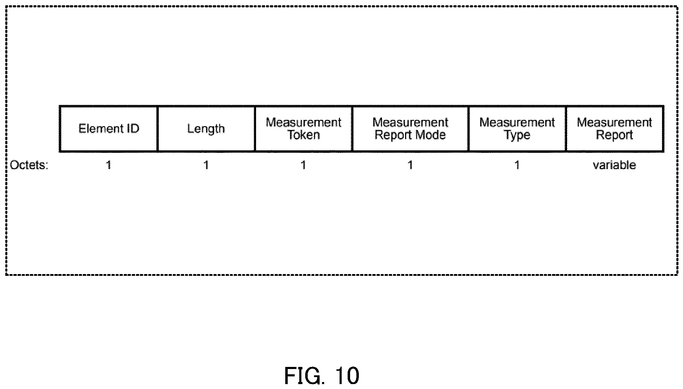

FIG. 10 illustrates an exemplary format (Measurement Report element format) of the Measurement Report (Element ID = 39) illustrated in FIG. 4 (e.g., see Figure 9-191 in NPL 3). As illustrated in FIG. 10, the format of the Measurement Report may include, for example, information (e.g., "Measurement Type") indicating a type of the report.

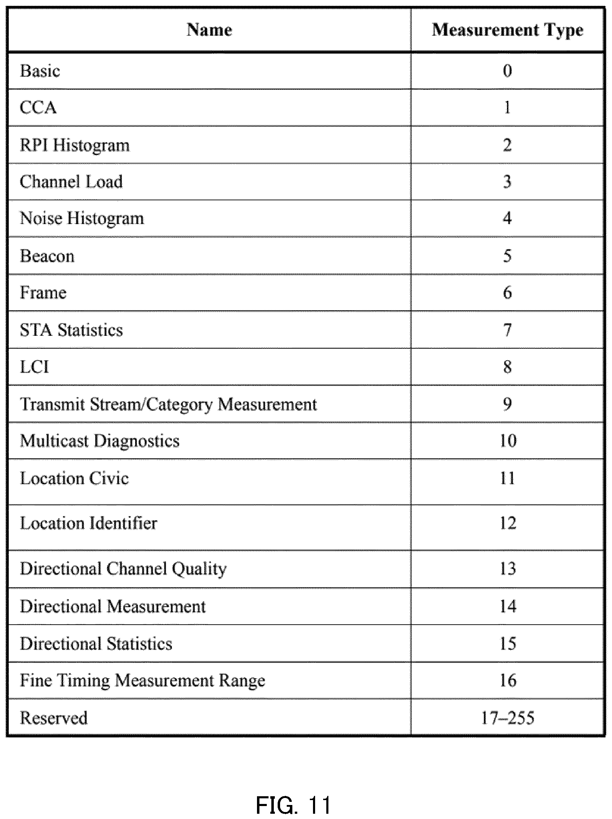

FIG. 11 illustrates exemplary information (e.g., information in a table format) set (or defined) in "Measurement Type" in the Measurement Report format illustrated in FIG. 10 (e.g., see Table 9-107 in NPL 3). As illustrated in FIG. 11, in the Measurement Type, information "Beacon (or Beacon report)" (e.g., Measurement Type = 5) reporting a measurement result of received quality with a beacon may be set.

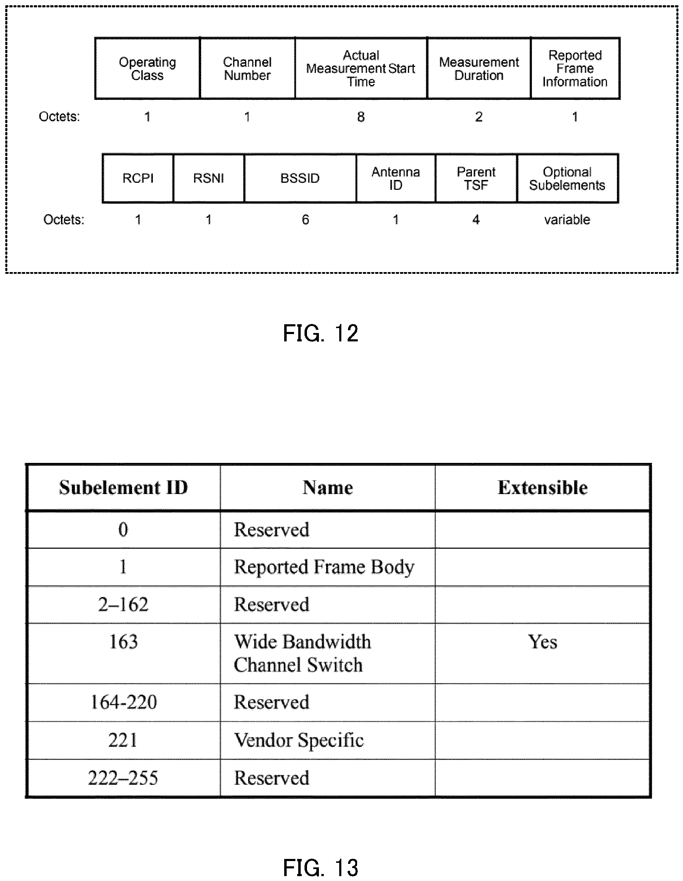

FIG. 12 illustrates an exemplary format of the Measurement Report field illustrated in FIG. 10 for the Beacon Report (Measurement Type = 5) illustrated in FIG. 11 (e.g., see Figure 9-199 of NPL 3). In the format of the Beacon Report illustrated in FIG. 12, Received Channel Power Indication (RCPI) may indicate reception channel power reported

EP 4 307 759 A1

by the STA, and Received Signal-to-Noise Indication (RSNI) may indicate a received-signal-to-noise-ratio reported by the STA.

Further, "Optional Subelements" illustrated in FIG. 12 may specify additional information (e.g., subelement), for example. FIG. 13 illustrates exemplary information (e.g., information in a table format) set in the Optional Subelements illustrated in FIG. 12 (e.g., see Table 9-112 in NPL 3).

The examples of the measurement request and the measurement report of the received quality have been described.

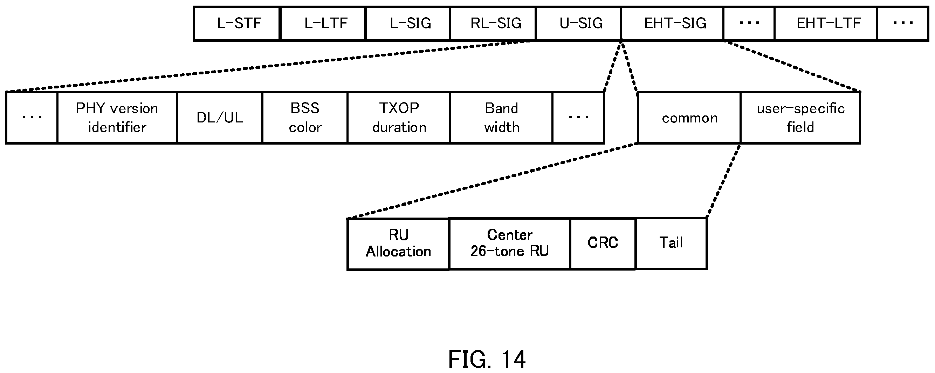

Note that, for the measurement of received quality, not only a beacon, but another signal may be used. For example, a format of a preamble (hereinafter, referred to as an "Extream High Throughput (EHT) preamble") used in 11be has been discussed (e.g., see NPL 4). For example, for the measurement of received quality, information included in the EHT preamble and the format indicated by the preamble may be used. FIG. 14 illustrates an exemplary format of the EHT preamble (e.g., see NPL 4).

In FIG. 14, the "U-SIG" field may include "DL/UL" and "BSS color". The "DL/UL" may include, for example, information indicating whether the corresponding communication is downlink communication (Downlink: DL) or uplink communication (Uplink: UL). Further, the BSS color may include, for example, information identifying a BSS to which the AP belongs. Furthermore, in FIG. 14, the "EHT-SIG" field (e.g., common field) may include "RU Allocation". The RU allocation may include information on allocation of a frequency band.

[Exemplary Configuration of Radio Communication System]

The radio communication system according to an embodiment of the present disclosure may include at least two APs 100 and one STA 200.

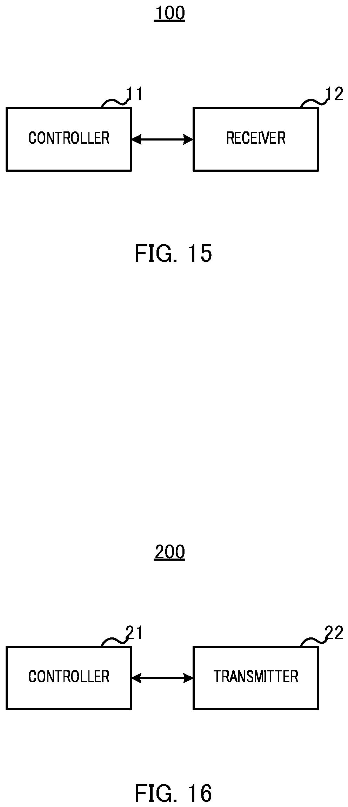

FIG. 15 is a block diagram illustrating an exemplary configuration of a part of AP 100. In AP 100 illustrated in FIG. 15, for example, receiver 12 (e.g., corresponding to reception circuitry) receives, from a connected STA (e.g., STA200 associated with AP 100), information on received quality based on a signal from at least one of another AP different from AP 100 among a plurality of APs performing coordinated communication and an STA connected to another AP. Controller 11 (e.g., corresponding to control circuitry) sets coordinated communication (e.g., sets up coordinated communication) for the connected STA based on the information, for example.

FIG. 16 is a block diagram illustrating an exemplary configuration of a part of STA 200. In STA 200 illustrated in FIG. 16, for example, controller 21 (e.g., corresponding to control circuitry) measures received quality based on a signal from at least one of second AP different from first AP that is a connection destination among a plurality of APs performing coordinated communication and an STA connected to second AP. Transmitter 22 (e.g., corresponding to transmission circuitry) transmits information on the received quality to first AP.

Hereinafter, an example will be described in which at least two APs 100 cooperate with each other to communicate with STA 200. Note that in the following description, the terms "packet" and "frame" are non-limiting examples of "signal".

[Exemplary Configuration of AP]

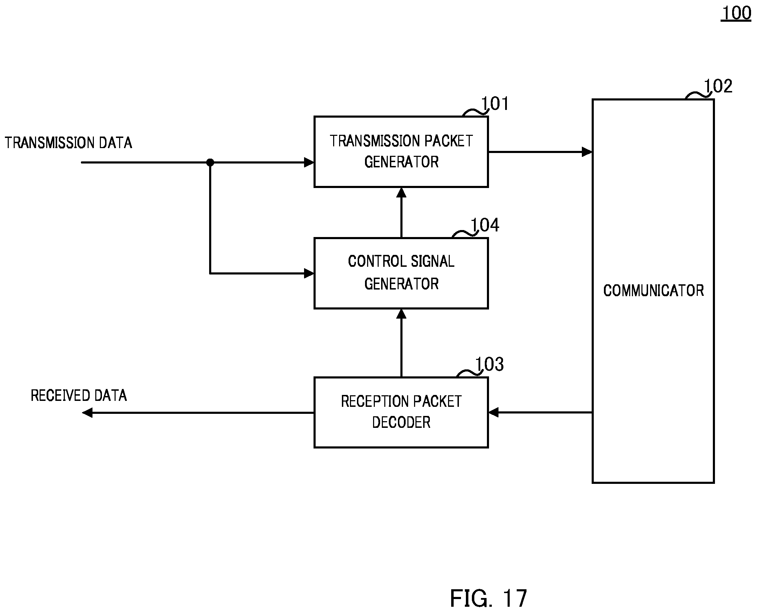

FIG. 17 is a block diagram illustrating an exemplary AP according to the present embodiment. AP 100 illustrated in FIG. 17 may include, for example, transmission packet generator 101, communicator 102, reception packet decoder 103, and control signal generator 104.

For example, controller 11 illustrated in FIG. 15 may include at least one of transmission packet generator 101, reception packet decoder 103, and control signal generator 104 illustrated in FIG. 17. Further, for example, receiver 12 illustrated in FIG. 15 may include communicator 102 illustrated in FIG. 17.

Transmission packet generator 101, for example, generates a transmission packet from transmission data from a processor in a higher layer (not illustrated) and data (e.g., control data) generated by control signal generator 104, and outputs the generated packet to communicator 102.

For example, communicator 102 may perform radio communication (at least one of transmission and reception) with STA 200. For example, communicator 102 converts the transmission packet input from transmission packet generator 101 into a radio transmission signal, and transmits the radio transmission signal via an antenna. Further, communicator 102 receives a radio reception signal, converts the radio reception signal into a reception packet, and outputs the reception packet to reception packet decoder 103.

Further, communicator 102 may perform communication (e.g., communication using at least one of a wired backhaul and a wireless backhaul) with another AP 100, for example

Reception packet decoder 103 decodes the reception packet, and outputs the received data input from communicator 102 to a processor in a higher layer (not illustrated). Alternatively, reception packet decoder 103 decodes the reception packet and outputs control information to control signal generator 104.

5

Control signal generator 104 generates control information based on at least one of the transmission data, the control information input from reception packet decoder 103, and the internal state, and outputs the generated control information to transmission packet generator 101. For example, control signal generator 104 may generate control information on coordinated communication.

[Exemplary Configuration of STA]

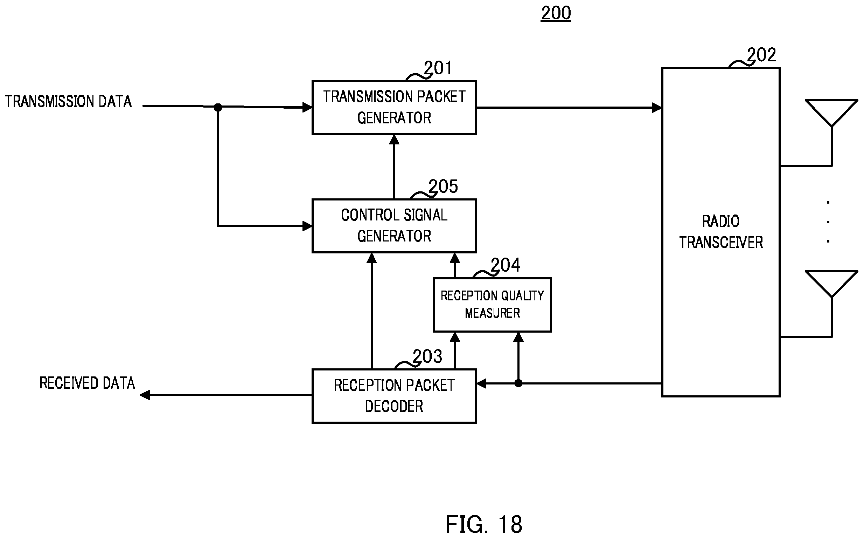

FIG. 18 is a block diagram illustrating an exemplary STA according to the present embodiment. STA 200 illustrated in FIG. 18 may include transmission packet generator 201, radio transceiver 202, reception packet decoder 203, received quality measurer 204, and control signal generator 205.

For example, controller 21 illustrated in FIG. 16 may include at least one of transmission packet generator 201, reception packet decoder 203, received quality measurer 204, and control signal generator 205 illustrated in FIG. 18. Further, for example, transmitter 22 illustrated in FIG. 16 may include radio transceiver 202 illustrated in FIG. 18.

Transmission packet generator 201, for example, generates a transmission packet from transmission data received from a processor (not illustrated) in a higher layer and data (e.g., control information) generated by control signal generator 205, and outputs the generated packet to radio transceiver 202.

Radio transceiver 202 converts the transmission packet input from transmission packet generator 201 into a radio transmission signal, and transmits the radio transmission signal via an antenna.

Radio transceiver 202 receives a radio reception signal, converts the radio reception signal into a reception packet, and outputs the reception packet to reception packet decoder 203 and received quality measurer 204.

Reception packet decoder 203 decodes the reception packet and outputs the received data input from radio transceiver 202 to a processor (not illustrated) in a higher layer. Alternatively, reception packet decoder 203 decodes the reception packet and outputs control information to received quality measurer 204 and control signal generator 205.

For example, received quality measurer 204 measures received quality based on at least one of the reception packet input from radio transceiver 202, the control information input from reception packet decoder 203, and the internal state, and outputs information on the received quality to control signal generator 205.

Control signal generator 205 generates control information based on at least one of the transmission data, the control information input from reception packet decoder 203, the information on the received quality input from received quality measurer 204, and the internal state, and outputs the generated control information to transmission packet generator 201.

[Exemplary Operation of Coordinated Communication]

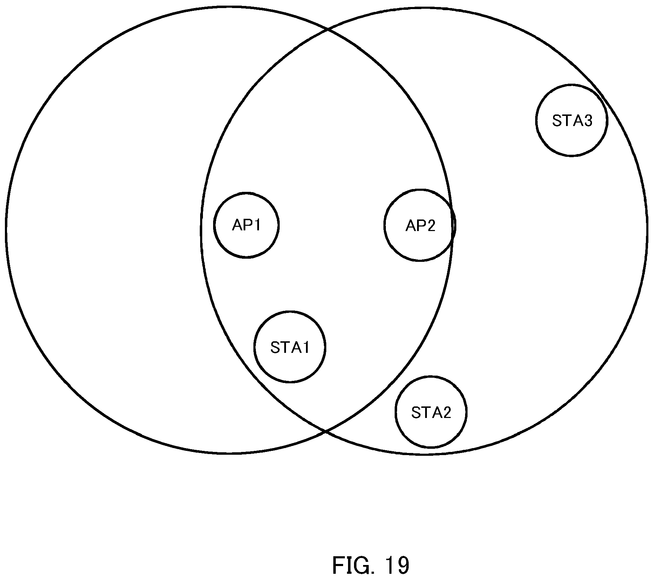

Hereinafter, an exemplary operation of coordinated communication by AP 100 and STA 200 will be described. FIG. 19 illustrates exemplary placement of AP 100 and STA 200 performing coordinated communication.

In the example illustrated in FIG. 19, AP 1 and AP 2 can transmit and receive signals (e.g., including beacons) to and from each other. Further, STA 1 is associated (or connected) with AP 1, and STA 2 and STA 3 are associated with AP 2.

In addition, STA 1 is present (placed) at a position where STA 1 can receive signals of AP 1, AP 2, and STA 2, and receive no signal of STA 3. Note that the "position where STA 1 receives no signal" may be replaced with, for example, a position where the signal does not reach or a position where the signal reception fails.

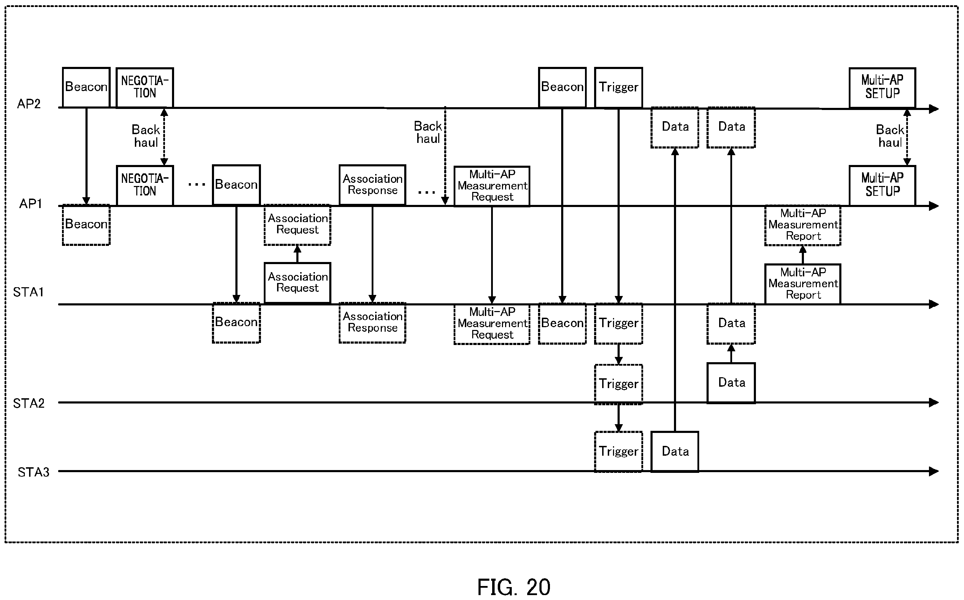

FIG. 20 is a sequence diagram illustrating an exemplary operation in which, in FIG. 19, AP 1 and STA 1 are placed in this order after AP 2 and STA 2 and STA 3 associated with AP 2 are placed, and setup processing of coordinated communication is performed after STA 1 is associated with AP 1.

In FIG. 20, for example, STA 1 belongs to the same BSS as AP 1, and AP 2, STA2, and STA 3 belong to a BSS (e.g., Overlapping BSS: OBSS) that differs from the BSS to which STA 1 belongs. Note that, for example, AP 1 may be referred to as a "BSS-AP", AP 2 may be referred to as an "OBSS-AP", and STA2 and STA 3 may be referred to as "OBSS-STAs", for STA 1. Further, for example, an STA (not illustrated) that belongs to the same BSS as AP 1 may be referred to as a "BSS-STA".

<Negotiation>

In FIG. 20, AP 1 and AP 2 may transmit a Beacon. The Beacon transmitted from AP 1 and AP 2 may include, for example, whether coordinated communication can be performed and the backhaul used for the coordinated communication. For example, the information on the backhaul includes at least one of a type of the available backhaul (e.g., wireless backhaul or wired backhaul), a frequency band used for the wireless backhaul communication, and information (e.g., Internet Protocol (IP) address) used for the wired backhaul communication.

For example, AP 1 may perform backhaul communication with AP 2 and negotiation between AP 1 and AP 2 based on the information on the backhaul included in the Beacon received from AP 2. The configuration of APs (e.g., AP 1 and AP 2) performing coordinated communication may be performed in this negotiation. For example, a coordination setup (or coordination construction) may be performed in the negotiation, for example.

In the coordination setup, for example, AP 100 for controlling the coordinated communication may be specified in the configuration in which one AP controls coordinated communication. For example, the AP that controls the coordinated communication may be referred to as a "Master AP", and the AP that is controlled may be referred to as a "Slave AP".

Further, in the coordination setup, for example, another AP that can be controlled by each AP 100 may be specified in the configuration in which the AP that performs coordination control changes. For example, the AP that controls coordinated communication may be referred to as a "Sharing AP", and the AP that is controlled may be referred to as a "Shared AP".

Further, the coordination setup may include processes such as, for example, addition of each AP 100 to an AP group in which AP 100 can cooperate (referred to as a coordination set), determination of the available coordination scheme, and specification of AP-ID to be allocated to each AP by the master AP or the Sharing AP. Note that the specification of AP-ID may be performed, for example, in a negotiation between a Master AP and a Slave AP or a negotiation between a Sharing AP and a Shared AP.

<Quality Measurement Request>

For example, STA 1 may be associated with AP 1 by Association Request and Association Response transmitted and received between AP 1 and STA 1.

After the association of STA 1 with AP 1, AP 1 may indicate, to STA 1, information on the request for measurement of received quality of the coordinated communication (e.g., referred to as "Multi-AP Measurement Request"), for example.

The Multi-AP Measurement Request may include, for example, information on the AP (e.g., OBSS-AP) or STA subjected to the measurement of received quality. In the example illustrated in FIG. 20, AP 2 (e.g., OBSS-AP for STA 1) may indicate, to AP 1, information on communication duration of AP 2 or the STA (e.g., STA 2 and STA 3) associated with AP 2, such as transmission timing (e.g., referred to as "Start Timing") of a Beacon by AP 2 and uplink communication duration (e.g., referred to as "Measurement Duration") for AP 2 following the Beacon, in the backhaul. AP 1 may indicate, to STA 1, the Multi-AP Measurement Request including information (identifier) identifying AP 2, information on a channel (e.g., primary channel) of AP 2, and/or information such as the Start Timing and the Measurement Duration, for example.

Note that the information identifying AP 2 may be short ID (ID smaller than BSSID in size) based on BSSID such as BSS ID, AP-ID, or BSS color. Hereinafter, the information identifying AP 2 (e.g., OBSS-AP) for STA 1 may be referred to as an "OBSS-AP-ID".

STA 1 may, for example, perform measurement (e.g., measurement of an effect of interference caused by an STA (e.g., including an AP) not included in the component of the BSS to which STA 1 belongs) specified by the Multi-AP Measurement Request indicated by AP 1.

For example, STA 1 may measure reception power of a signal (e.g., Beacon) from AP 2 and obtain an identifier of an STA that possibly gives interference to STA 1, based on the packet received in a period from the Start Timing and the Measurement Duration. The identifier of the STA may be, for example, STA-ID, Association ID (AID), AID11, AID12, a MAC address, or a shortened MAC address, and hereinafter, will be referred to as "OBSS-STA-ID".

For example, STA 1 may receive a Beacon and Trigger (trigger frame) transmitted from AP 2 in a primary channel, and obtain a transmission frequency band and an STA identifier (e.g., AID 12) of each STA to be transmitted in the uplink communication following the Trigger, based on the uplink transmission specification information included in the Trigger. STA 1 may then measure the effect of the interference (e.g., interference power) caused to STA 1 by each STA (e.g., OBSS-STA) based on the reception status of the signal (e.g., Data) following the Trigger, for example.

For example, when reception power (interference power) of the signal transmitted from the STA associated with AP 2 is greater than or equal to a threshold value, STA 1 may determine that the interference effect is caused to STA 1 by the STA, and when the reception power is less than the threshold value, STA 1 may determine that there is no interference effect caused to STA 1 by the STA. For example, in the example illustrated in FIG. 20, STA 1 may determine that there is an effect of the interference caused by STA 2, and may determine that there is no effect of the interference caused by STA 3.

Alternatively, STA 1 may receive a frame of an uplink signal transmitted from the OBSS-STA (e.g., STA 2), obtain a MAC address of the OBSS-STA from an address field included in the received frame (e.g., Transmitter Address (TA)), and set the MAC address or a shortened MAC address based on the MAC address as an identifier of the OBSS-STA. The shortened MAC address may be, for example, a part of the MAC address or a hash value generated based on at least a part of the MAC address by a predetermined hash function.

<Report on Measurement Result>

STA 1 may indicate, to AP 1, Multi-AP Measurement Report including information on at least one of reception power of AP 2 measured based on a Beacon, an STA (e.g., OBSS-STA-ID of STA 2) having the interference effect measured based on the uplink communication, and reception power of STA 2.

Further, AP 1 may indicate the information included in the Multi-AP Measurement Report received from STA 1, to AP 2 via a backhaul.

<Multi-AP Setup>

AP 1 and AP 2 may perform a Multi-AP setup based on the information included in the Multi-AP Measurement Report reported from STA 1, for example. Further, AP 1 and AP 2 may perform scheduling coordinated by the Multi-AP setup.

For example, a case will be described in which AP 100 (e.g., Master AP or Sharing AP) that controls coordinated communication determines that, when the uplink communication from STA 2 to AP 2 and the downlink communication from AP 1 to STA 1 are simultaneously performed, the effect of the interference caused by STA 2 performing transmission processing in the uplink to STA 1 performing reception processing in the downlink is great, and a reception error is likely to occur in STA 1. In this case, AP 100 that controls coordinated communication can perform scheduling for allocating the uplink communication from STA 2 to AP 2 and the downlink communication from AP 1 to STA 1 to different resources (e.g., different timing or different frequency bands) with each other. This process can reduce the frequency of occurrence of reception errors in STA 1.

Further, a coordination scheme of AP 1 and AP 2 may be selected by the Multi-AP setup. For example, in a case where the interference effect from STA 2 to STA 1 is great (e.g., in a case where the reception power of STA 2 in STA 1 is greater than or equal to a threshold value), C-OFDMA may be set when transmission to STA 2 and transmission to STA 1 are simultaneously performed. Further, for example, in a case where the interference effect from STA 3 to STA 1 is small (e.g., in a case where the reception power of STA 3 in STA 1 is less than the threshold value), C-SR may be set when transmission to STA 3 and transmission to STA 1 are simultaneously performed. Furthermore, for example, in a case where reception power of AP 2 in STA 1 is high (e.g., in a case where reception power is greater than or equal to a threshold value), JT in which AP 1 and AP 2 simultaneously transmit and receive data to and from STA 1 and CBF that reduces interference power may be set.

Note that the selection of the coordination scheme may be performed by, for example, a Master AP or a Sharing AP, or may be performed in a negotiation between a Master AP and a Slave AP or a Sharing AP and a Shared AP.

As described above, AP 1 can obtain, from STA 1 that is subjected to the coordinated communication, information on the received quality using a signal from the OBSS-AP (e.g., AP 2) or OBSS-STA (e.g., STA 2) that possibly interferes with STA 1, and can execute a setup of the coordinated communication. Accordingly, AP 1 can select scheduling and a coordination scheme corresponding to the communication environment in STA 1, and thus throughput can be enhanced.

[Exemplary Format]

Next, exemplary formats of the Multi-AP Measurement Request and the Multi-AP Measurement Report in the exemplary operation illustrated in FIG. 20 will be described.

<Exemplary Format of Multi-AP Measurement Request>

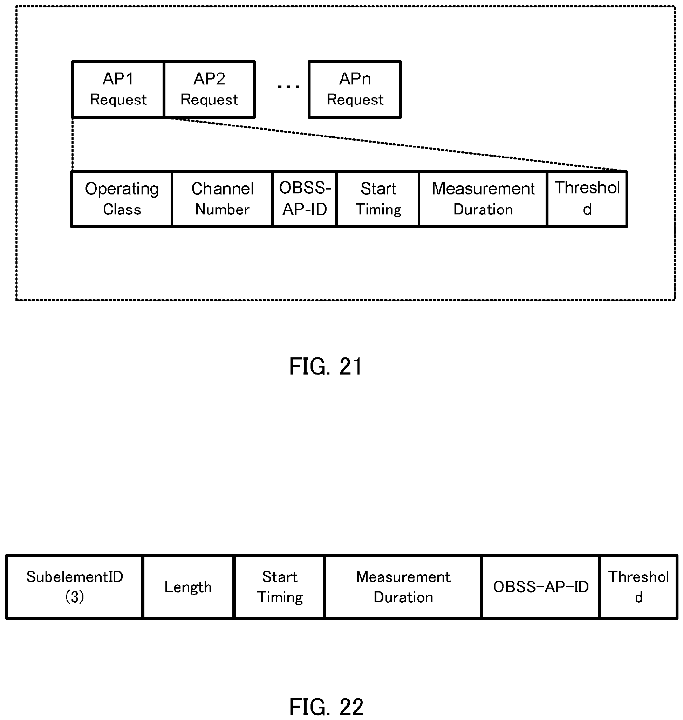

FIG. 21 illustrates an exemplary format of Multi-AP Measurement Request requesting measurement of n APs 100 (e.g., n APs included in the coordination set).

In FIG. 21, the formats of "Operating Class" and "Channel Number" may be the same as the format of the Beacon request illustrated in FIG. 7. Further, for example, in "Threshold" illustrated in FIG. 21, the same information as the detection threshold value included in the Beacon Reporting illustrated in FIG. 9 may be set. Furthermore, the format of the Threshold may be the same as that of the Beacon Reporting illustrated in FIG. 9, and two Threshold fields may be provided to specify different values for the OBSS-AP and OBSS-STA, respectively.

Further, as illustrated in FIG. 21, the Multi-AP Measurement Request may include information identifying the OBSS-AP (e.g., "OBSS-AP-ID"). STA 200 may identify an OBSS-AP for measuring received quality (e.g., reception power or effect of interference) based on the OBSS-AP-ID included in the Multi-AP Measurement Request. In other words, STA 200 need not measure received quality of an AP different from the OBSS-AP-ID included in the Multi-AP Measurement Request. This can avoid an increase in processing (decoding processing) in STA 200.

Further, the Multi-AP Measurement Request illustrated in FIG. 21 may be included in the Element illustrated in FIG. 3, for example. In this case, for example, the Multi-AP Measurement Request may be allocated to an unused area (Reserved area, e.g., 207) of the Element ID illustrated in FIG. 4. Note that the Element ID to which the Multi-AP Measurement Request is allocated is not limited to 207, and may be another value.

Further, the Multi-AP Measurement Request illustrated in FIG. 21 may be included in, for example, the Measurement Request field illustrated in FIG. 5. In this case, for example, the Multi-AP Measurement Request may be allocated to an unused area (Reserved area, e.g., 17) of the Measurement type illustrated in FIG. 6. Note that the Measurement type to which the Multi-AP Measurement Request is allocated is not limited to 17, and may be another value.

Note that the format of the Multi-AP Measurement Request is not limited to the format illustrated in FIG. 21. For example, the Multi-AP Measurement Request may be set in the Optional Subelements of the Beacon request format illustrated in FIG. 7. In this case, the Multi-AP Measurement Request may be added to an unused area (Reserved area, e.g., Subelement ID = 3) in the Optional Subelements table illustrated in FIG. 8 as a Multi AP Request subelement, for example. Note that the Subelement ID indicating the Multi AP Request subelement is not limited to 3, and may be another value.

FIG. 22 illustrates an exemplary format of the Multi AP Request subelement. The elements included in the format of the Multi AP Request subelement illustrated in FIG. 22 may be, for example, the same as the elements included in the format of the Multi-AP Measurement Request illustrated in FIG. 21, or some elements may be included. Further, for the "Operating Class" and the "Channel Number" illustrated in FIG. 21, the "Operating Class" and the "Channel Number" in the Beacon request format illustrated in FIG. 7 may be used, and therefore, the "Operating Class" and the "Channel Number" need not be included in the format of the Multi AP Request subelement illustrated in FIG. 22.

<Exemplary Format of Multi-AP Measurement Report>

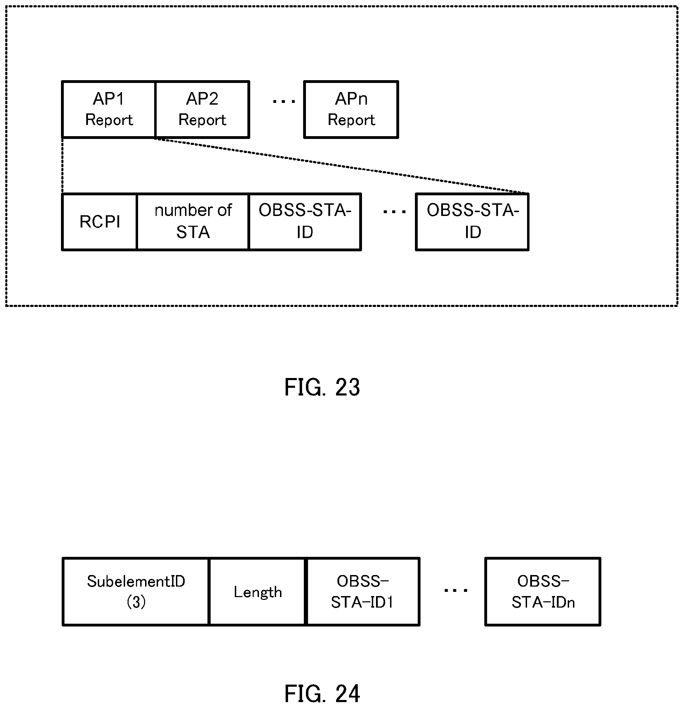

FIG. 23 illustrates an exemplary format of Multi-AP Measurement Report for reporting the measurement of n APs 100.

In FIG. 23, the format of "RCPI" may be the same as that of RCPI included in the Beacon report format illustrated in FIG. 12. Further, in FIG. 23, the "number of STA" may indicate the number of "OBSS-STA-ID" fields following the "number of STA" field in the format illustrated in FIG. 23. In the "OBSS-STA-ID" illustrated in FIG. 23, information identifying the OBSS-STA that has the interference effect on STA 200 may be included.

Further, the Multi-AP Measurement Report illustrated in FIG. 23 may be included in the Element illustrated in FIG. 3, for example. In this case, for example, the Multi-AP Measurement Report may be allocated to an unused area (Reserved area, e.g., 208) of the Element ID illustrated in FIG. 4. Note that the Element ID to which the Multi-AP Measurement Report is allocated is not limited to 208, and may be another value.

Further, the Multi-AP Measurement Report illustrated in FIG. 23 may be included in, for example, the Measurement Report field illustrated in FIG. 10. In this case, for example, the Multi-AP Measurement Report may be allocated to an unused area (Reserved area, e.g., 17) of the Measurement type illustrated in FIG. 11. Note that the Measurement type to which the Multi-AP Measurement report is allocated is not limited to 17, and may be another value.

Note that the format of the Multi-AP Measurement Report is not limited to the format illustrated in FIG. 23. For example, the Multi-AP Measurement Report may be set in the Optional Subelements of the Beacon report format illustrated in FIG. 12. In this case, the Multi-AP Measurement Report may be added to an unused area (Reserved area, e.g., Subelement ID = 3) in the Optional Subelements table illustrated in FIG. 13 as a Multi AP Report subelement, for example. Note that the Subelement ID indicating the Multi AP Report subelement is not limited to 3, and may be another value.

FIG. 24 illustrates an exemplary format of the Multi AP Report subelement. The element included in the format of the Multi AP Request subelement illustrated in FIG. 24 may be, for example, the same as the element included in the format of the Multi-AP Measurement Report illustrated in FIG. 23, or some elements may be included. Further, for "RCPI" illustrated in FIG. 23, the "RCPI" in the Beacon report format illustrated in FIG. 12 may be used, and therefore, the "RCPI" need not be included in the format of the Multi AP Report subelement illustrated in FIG. 24.

The exemplary formats have been described thus far.

As described above, in the present embodiment, STA200 measures received quality and transmits information (e.g., Multi-AP Measurement Report) on the received quality to AP 100 based on a signal from at least one of the OBSS-AP different from AP 100 with which STA 200 is associated among a plurality of APs 100 and the OBSS-STA associated with the OBSS-AP. Further, AP 100 executes a setup of coordinated communication for STA 200 based on the information (e.g., Multi-AP Measurement Report) from STA 200.

Thus, in the present embodiment, AP 100 can execute the setup of the coordinated communication based on the communication environment including the interference effect by OBSS on STA 200 subjected to the coordinated communication. For example, AP 100 can perform an appropriate communication setting between a plurality of APs 100 and STA 200 based on the interference effect on STA 200, which possibly varies depending on the position of STA 200 with respect to the plurality of APs 100. Therefore, according to the present embodiment, the setup efficiency of the coordinated communication can be enhanced.

(Variation 1 of Embodiment 1)

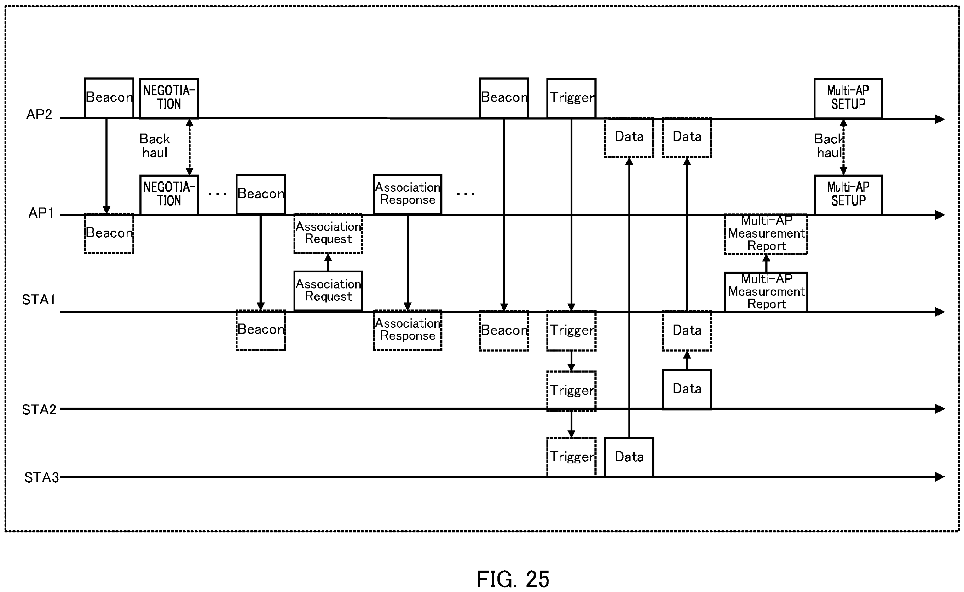

FIG. 25 is a sequence diagram illustrating an exemplary operation in a variation of Embodiment 1.

In FIG. 25, for example, the Multi-AP Measurement Request indicated by AP 1 may be included in the Beacon or the Association Response. In this case, for example, the duration for measuring the interference effect in STA 1 need not be limited, unlike the exemplary operation illustrated in FIG. 20.

STA 1 may, for example, indicate, to AP 1, the Multi-AP Measurement Report each time STA 1 receives a packet from the OBSS-STA (e.g., STA 2 or STA 3) and the OBSS-AP (e.g., AP 2) or at regular intervals. Alternatively, for example, AP 1 may specify a measurement method (e.g., a period for indicating the Multi-AP Measurement Report) by using the Multi-AP Measurement Request.

Further, the format of the Multi-AP Measurement Request in this case may be a format in which, among elements illustrated in FIG. 21 or FIG. 22, the "Start Timing" and the "Measurement Duration" are not included, or may be a format in which a flag indicating either validity or invalidity of the "Start Timing" and the "Measurement Duration" is added.

The operation illustrated in FIG. 25 allows AP 1 to review, for example, scheduling for STA 1 and the coordination scheme depending on the change in the interference effect on STA 1; therefore, throughput can be enhanced.

(Variation 2 of Embodiment 1)

STA200 may determine whether to indicate the Multi-AP Measurement Report based on, for example, a fluctuation of reception power (e.g., referred to as "RxPow") of at least one of the OBSS-STA and OBSS-AP. For example, STA 200 may indicate the Multi-AP Measurement Report when the fluctuation of the RxPow is greater than or equal to a threshold value, and need not indicate the Multi-AP Measurement Report when the fluctuation of the RxPow is less than the threshold value.

In this case, for example, the Multi-AP Measurement Request illustrated in FIGS. 21 and 22 may include the threshold value of the fluctuation.

Further, when transmission power of the OBSS-STA is specified by the targeted reception power (e.g., referred to as "TargetRSSIOBSS") included in the Trigger, STA 200 may use a fluctuation of relative reception power (e.g., referred to as "relativeRxPow") calculated based on following equation (1) instead of the fluctuation of the above described reception power.

$$RelativeRxPow = RxPow - TargetRSSIOBSS \quad (1)$$

As described above, by controlling the indication of the Multi-AP Measurement Report based on the fluctuation of the reception power (or the relative reception power) of the OBSS-STA and OBSS-AP, the frequency of the indication of the Multi-AP Measurement Report can be reduced, and thus overhead of signaling can be reduced. Further, for example, when the fluctuation of the reception power (or the relative reception power) of the OBSS-STA and OBSS-AP is greater than or equal to a threshold value, the Multi-AP Measurement Report is indicated from STA 200 to AP 100, so that AP 100 can perform scheduling and a setup of the coordinated communication corresponding to the fluctuation of the interference effect in STA 200, and thus the throughput can be enhanced.

(Variation 3 of Embodiment 1)

In Embodiment 1, for example, in FIG. 20 (or FIG. 25), STA 1 measures the interference effect of each OBSS-STA (e.g., STA 2) based on the uplink transmission specification information included in the Trigger transmitted from the OBSS-AP (e.g., AP 2), but the present disclosure is not limited thereto.

For example, in FIG. 20 (or FIG. 25), scheduling information on AP 2 (e.g., information including OBSS-STA-ID and the frequency band of STA 2 performing uplink communication) may be indicated to AP 1 through a backhaul, and AP 1 may indicate the scheduling information (e.g., allocation information such as a frequency band) to STA 1. The scheduling information on AP 2 may be included in the Multi-AP Measurement Request indicated from AP 1 to STA 1, for example.

Note that the same format as that of the RU Allocation illustrated in FIG. 14 may be applied to the allocation information indicated by AP 1 to STA 1.

For example, when STA 1 receives the EHT preamble illustrated in FIG. 14, STA 1 may indicate, to AP 1 by the Multi-AP Measurement Report, receivability (or information on the interference effect) in each frequency band (e.g., allocated frequency band for the OBSS-STA) indicated in a case where "DL/UL" included in the EHT preamble is UL and BSS color is BSS color of AP 2. AP 1 may identify an OBSS-STA-ID that interferes with STA 1, based on the scheduling information on AP 2 and the Multi-AP Measurement Report.

According to Variation 3, STA 1 can identify an OBSS-STA, measure received quality for the OBSS-STA, and identify the OBSS-STA-ID of the STA that interferes with STA 1, without decoding the Trigger frame transmitted from AP 2. Further, for example, even when STA 1 is placed at a position where STA 1 receives no signal of AP 2, STA 1 can identify an OBSS-STA, measure the received quality for the OBSS-STA, and identify the OBSS-STA-ID of the STA that interferes with STA 1.

(Variation 4 of Embodiment 1)

In FIG. 20 or FIG. 25, STA 1 may, for example, indicate the measurement result (e.g., Multi-AP Measurement Report) to AP 2 (AP that differs from AP 1 with which STA 1 is associated, or OBSS-AP). For example, STA 1 may indicate the measurement result to AP 2 or by broadcasting, using a frame (e.g., Public Action frame) available for transmission to a BSS that differs from the BSS to which STA 1 belongs.
Further, for example, AP 2 may indicate, to AP 1 (e.g., BSS-AP), the Multi-AP Measurement Report indicated from STA 1 through a backhaul.

(Variation 5 of Embodiment 1)

STA 1 may determine an effective coordination scheme (e.g., C-OFDMA, C-SR, JT, or CBR) based on the measurement result by the Multi-AP Measurement Request and indicate information on the determined coordination scheme to AP 1.

(Embodiment 2)

The configuration of AP 10 and STA 200 according to the present embodiment may be, for example, the same as that of Embodiment 1.

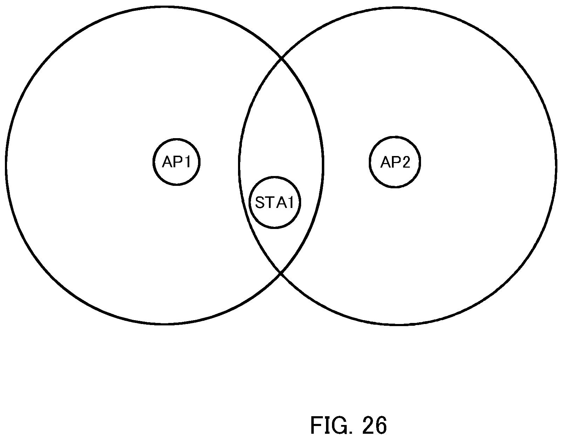

FIG. 26 illustrates exemplary placement of AP 100 and STA 200 performing coordinated communication.
In the embodiment illustrated in FIG. 26, STA 1 is associated with AP 1. Further, in FIG. 26, AP 1 and AP 2 are placed at positions where AP 1 and AP 2 transmit and receive no signal (e.g., including beacon) to and from each other by radio, for example. Further, STA 1 can receive a signal from AP 2. Note that AP 1 and AP 2 can use a wired backhaul.

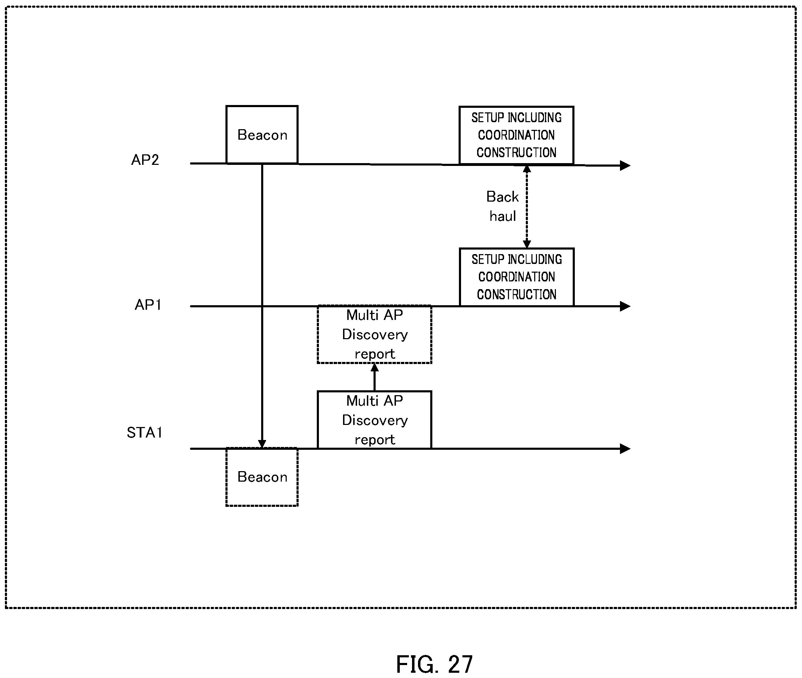

FIG. 27 is a sequence diagram illustrating an exemplary operation of performing setup processing of coordinated communication when, in FIG. 26, after AP 1 and STA 1 associated with AP 1 are placed, AP 2 is placed (added) at a position where AP 1 cannot receive a signal of AP 2 and STA 1 can receive the signal.
In FIG. 27, a Beacon transmitted by AP 2 may include, for example, whether coordinated communication can be performed by AP 2 and backhaul information used in the coordinated communication. The backhaul information may include, for example, at least one of a type of the backhaul (e.g., wireless backhaul or wired backhaul) available for AP 2, a frequency band used at the time of the wireless backhaul, and information (e.g., IP address) used for wired backhaul communication.
When STA 1 receives (in other words, detects) a Beacon from AP 2, STA 1 may transmit, to AP 1, information including an identifier (e.g., BSS ID, or short ID (e.g., BSS color) based on BSSID) of AP 2, and the backhaul information on AP 2, for example. The identifier of AP 2 and the backhaul information on AP 2 may be transmitted to AP 1, for example, by a new format (e.g., referred to as "Multi AP Discovery report"), or may be transmitted to AP 1 by an existing format.

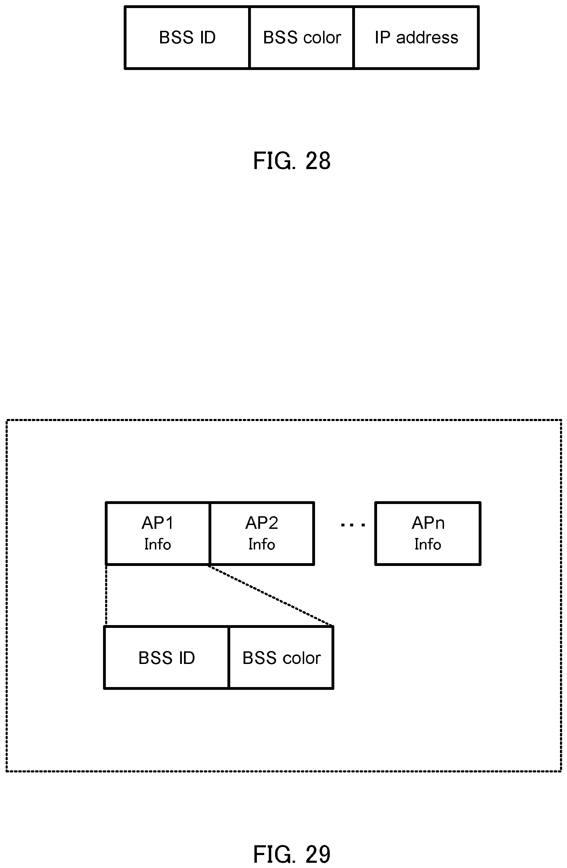

FIG. 28 illustrates an exemplary format of the Multi AP Discovery report.
The Multi AP Discovery report illustrated in FIG. 28 may be included in the Element illustrated in FIG. 3, for example. In this case, for example, the Multi AP Discovery report may be allocated to an unused area (Reserved area, e.g., 209) of the Element ID illustrated in FIG. 4. Note that the Element ID to which the Multi AP Discovery report is allocated is not limited to 209, and may be another value.
Further, the Multi AP Discovery report illustrated in FIG. 28 may be included in, for example, the Measurement Report illustrated in FIG. 10, and in this case, the Multi AP Discovery report may be allocated to an unused area (Reserved area, e.g., 19) of the Measurement type illustrated in FIG. 11, for example. Note that the Measurement type to which the Multi AP Discovery report is allocated is not limited to 19, and may be another value.
Further, the Multi-AP Measurement Report may be used instead of the Multi AP Discovery report, for example. In this case, a subelement (e.g., Discovery subelement) corresponding to the format of the Multi AP Discovery report illustrated in FIG. 28 may be set (e.g., added) in the Multi-AP Measurement Report, for example.
In FIG. 27, AP 1 may identify that AP 2 is placed at a position where AP 2 can perform coordinated communication for STA 1, based on the identifier indicated from STA 1. In addition, AP 1 may perform backhaul communication with AP 2 to perform a coordination setup operation, based on the backhaul information (e.g., IP address) of AP 2 indicated from STA 1.

As described above, when STA 200 detects an OBSS-AP, STA 200 transmits the Multi AP Discovery report including information on the OBSS-AP to AP 100 (e.g., BSS-AP) with which STA200 is associated. This allows the setup of the coordinated communication for STA 200 by APs placed at positions where APs transmit and receive no beacon to and from each other.

(Variation of Embodiment 2)

In FIG. 27, for example, AP 1 may indicate information on an AP that has been already recognized by AP 1 (or AP that can receive a beacon) to STA 1 associated with AP 1. The information on the AP that has been already recognized by AP 1 may be indicated by a new format (e.g., referred to as "Multi AP Discovery request"), or may be indicated by an existing format, for example.

For example, STA 1 may receive, from AP 1, information on the AP that has been already recognized by AP 1, and may transmit, to AP 1, an identifier and backhaul information (e.g., Multi AP Discovery Report) of an AP that differs from the AP that has been already recognized by AP 1 (in other words, an AP that has not been recognized by AP 1) among APs (e.g., OBSS-AP) from which STA 1 can receive signals.

As described above, STA 1 may, for example, indicate the Multi AP Discovery report when receiving a beacon from the AP that has not been recognized by AP 1, and need not indicate the Multi AP Discovery report when receiving a beacon from the AP that has been already recognized by AP 1.

This allows STA 1 to reduce transmission of the Multi AP Discovery report.

FIG. 29 illustrates an exemplary format of Multi AP Discovery request that indicates identifiers of n APs 100 that have been recognized by AP 1.

The Multi AP Discovery request illustrated in FIG. 29 may be included in the Element illustrated in FIG. 3, for example. In this case, for example, the Multi AP Discovery request may be allocated to an unused area (Reserved area, e.g., 210) of the Element ID illustrated in FIG. 4. Note that the Element ID to which the Multi AP Discovery request is allocated is not limited to 210, and may be another value.

Further, the Multi AP Discovery request illustrated in FIG. 29 may be included in the Measurement Request illustrated in FIG. 5, for example. In this case, for example, the Multi AP Discovery request may be allocated to an unused area (Reserved area, e.g., 20) of the Measurement type illustrated in FIG. 6. Note that the Measurement type to which the Multi AP Discovery request is allocated is not limited to 20, and may be another value.

Furthermore, for example, the Multi AP Measurement Request may be used instead of the Multi AP Discovery request. In this case, for example, the Multi-AP Measurement Request may include a flag indicating whether to indicate the Multi AP Discovery report.

Further, for example, a case has been described in which an AP that has been already recognized by AP 1 is indicated in the Multi AP Discovery request, but the present disclosure is not limited thereto. For example, when an AP that can cooperate with AP 1 is set (e.g., limited), AP 1 may indicate, to STA 1, the Multi AP Discovery request including information on the AP that can cooperate. Further, for example, a flag may be set in (e.g., added to) the Multi AP Discovery request to indicate whether AP indicated by the Multi AP Discovery request is an AP that has been already recognized and/or that can cooperate.

Further, for example, as illustrated in FIG. 29, the Multi AP Discovery request may include BSS ID in addition to BSS color. The BSS ID may be herein a value that is individually set to AP 100 (in other words, a value unique to AP 100), for example, and may be set to a value corresponding to a MAC address. On the other hand, the BSS color may be set to any value for AP 100, for example, and an overlapping value possibly sets between different BSSs.

For example, when the BSS color of AP 2 newly detected by STA 1 is the same as the BSS color of the AP included in the Multi AP Discovery request indicated from AP 1 to STA 1, STA 1 may determine whether AP 2 is an AP that has been already recognized by AP 1 based on the BSS ID.

Further, for example, when the BSS color of an AP (e.g., AP 2) that is detected by STA 1 and has not been recognized by AP 1 and the BSS color of an AP that has been already recognized by AP 1 overlap with each other, STA 1 or AP 1 may request for change of BSS color to the AP that has been detected by STA 1, or AP 1 that has received the Multi AP Discovery report may request for change of BSS color of the AP.

Thus, for example, overlapping of BSS color can be reduced, and erroneous recognition of AP 100 according to BSS color can be reduced.

(Variation 2 of Embodiment 2)

In Embodiment 2, an exemplary operation in which STA 1 transmits the Multi AP Discovery report has been described, but the operation is not limited to this exemplary operation. For example, instead of the Multi AP Discovery report or in conjunction with the Multi AP Discovery report, STA 1 may transmit Association Request to AP 2. Alternatively, STA 1 may transmit the Association Request to AP 2 in accordance with an instruction from AP 1. In these cases, STA 1 may perform backhaul communication between AP 1 and AP 2 via STA 1 as a terminal that can transmit and receive to and from both AP 1 and AP 2. This allows coordinated communication to be performed using a wireless backhaul even when no signal is received between APs.

The embodiments of the present disclosure have been described above.

Note that Embodiment 1 and Embodiment 2 may be combined with each other. For example, STA 200 may perform, in accordance with Embodiment 2, a setup operation of coordinated communication between a plurality of APs 100 that is positioned where the plurality of APs 100 does not transmit or receive to and from each other by radio, and then may continuously perform, in accordance with Embodiment 1, a setup operation of coordinated communication between a plurality of APs that is capable of performing backhaul communication. Note that the plurality of APs 100 that is positioned where the plurality of APs 100 does not transmit or receive to and from each other by radio may perform backhaul communication instead of radio communication by a beacon.

Further, in the above-described embodiments, an example has been described in which two APs 100 and one STA 200 are present, but the numbers of APs 100 and STAs 200 are not limited thereto. Furthermore, although a case has been described in which the number of APs 100 performing coordinated communication with STA 200 is two, the number of APs 100 performing coordinated communication may be three or more.

In addition, in the above-described embodiments, a case has been exemplarily described in which the information (e.g., Multi-AP Measurement Report) on the received quality transmitted from STA 200 is used for setting (setup) of the coordinated communication for STA 200 by AP 100 that is a connection destination of STA 200 and another AP. However, the present disclosure is not limited thereto, and for example, the information on the received quality transmitted from STA 200 may be used for setting of a communication that differs from the coordinated communication between at least one AP 100 and STA 200, for example.

In the above-described embodiments, an example has been described in which a plurality of APs 100 performs coordinated communication for STA 200, but the present disclosure is not limited thereto. For example, some of the plurality of APs 100 performing coordinated communication may be replaced with STA 200. For example, the present disclosure may be applied to a case where one or more APs and one or more STAs perform coordinated communication for another STA. Alternatively, the present disclosure may be applied to a case where two or more STAs perform coordinated communication for another STA.

Further, in the above embodiments, an AP that performs control related to coordinated communication has been described with the term "Master AP" or "Sharing AP", and an AP that is under the control related to the coordinated communication has been described with the term "Slave AP" or "Shared AP", but the present disclosure is not limited thereto and APs may be referred to other terms.

Furthermore, although the above embodiments have been described based on the format of 11be or 11ax as examples, the format to which an embodiment of the present disclosure is applied is not limited to these formats. For example, the format of the control information on coordinated communication (e.g., including Multi-AP Measurement Request, Multi-AP Measurement Report, Multi AP Discovery report, or Multi AP Discovery request) is merely an example, and the format is not limited thereto. An embodiment of the present disclosure may be applied to, for example, IEEE 802.11bd (Next Generation V2X (NGV)), which is a next generation standard from IEEE 802. 11p, which is an on-vehicle standard.

In addition, the frame configuration (e.g., format) described in each of the above-described embodiments is merely an example and is not limited thereto, and another configuration may be used. For example, in those frame configurations, some fields need not be configured, and another field may be further configured.

Further, the term representing any signal (packet) in the above embodiments is merely an example, and the present disclosure is not limited thereto.

Any component termed with a suffix, such as "-er," "-or," or "-ar" in the above-described embodiments may be replaced with other terms such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, notebook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to an embodiment of the present disclosure includes: control circuitry, which, in operation, measures received quality based on a signal from at least one of a certain access point different from a first access point of a connection destination and referred to as a second access point, and/or a terminal connected to the second access point; and transmission circuitry, which, in operation, transmits information on the received quality to the first access point.

In the embodiment of the present disclosure, the information on the received quality is used by the first access point and the second access point for setting coordinated communication for the terminal.

In the embodiment of the present disclosure, the terminal further includes reception circuitry, which, in operation, receives information on communication duration of the signal, from the first access point.

In the embodiment of the present disclosure, the transmission circuitry transmits information for identifying the terminal connected to the second access point, to the first access point.

In the embodiment of the present disclosure, the transmission circuitry transmits the information on the received quality to the first access point when a fluctuation of the received quality is greater than or equal to a threshold value.

In the embodiment of the present disclosure, the transmission circuitry transmits information on the second access point to the first access point when the second access point is detected.

In the embodiment of the present disclosure, the terminal further includes reception circuitry, which, in operation, receives information on a third access point from the first access point, and the transmission circuitry transmits, to the first access point, the information on the received quality of an access point different from the third access point among a plurality of the second access points.

In the embodiment of the present disclosure, the information on the second access point includes information used for wired communication between the first access point and the second access point.

An access point according to an embodiment of the present disclosure is a first access point, and the access point includes: reception circuitry, which, in operation, receives, from a first terminal connected to the first access point, information on received quality based on a signal from at least one of a second access point and/or a second terminal connected to the second access point; and control circuitry, which, in operation, sets communication for the first terminal based on the information.

In a communication method according to an embodiment of the present disclosure, a first terminal measures received quality based on a signal from at least one of a certain access point different from a first access point of a connection destination and referred to as a second access point, and/or a second terminal connected to the second access point, and transmits information on the received quality to the first access point.

In a communication method according to an embodiment of the present disclosure, a first access point receives, from a first terminal connected to the first access point, information on received quality based on a signal from at least one of a second access point and/or a second terminal connected to the second access point, and sets communication for the first terminal based on the information.

The disclosure of Japanese Patent Application No. 2021-040223, filed on March 12, 2021 including the specification, drawings and abstract, is incorporated herein by reference in its entirety.

Industrial Applicability

An exemplary embodiment of the present disclosure is useful for radio communication systems.

Reference Signs List

100 AP
11, 21 Controller
12 Receiver
22 Transmitter
101, 201 Transmission packet generator
102 Communicator
103, 203 Reception packet decoder
104, 205 Control signal generator
200 STA
202 Radio transceiver
204 Received quality measurer

**Claims**

1.  A terminal, comprising:

    control circuitry, which, in operation, measures received quality based on a signal from at least one of a certain access point different from a first access point of a connection destination and referred to as a second access point, and/or a terminal connected to the second access point; and
    transmission circuitry, which, in operation, transmits information on the received quality to the first access point.

2.  The terminal according to claim 1, wherein
    the information on the received quality is used by the first access point and the second access point for setting coordinated communication for the terminal.

3.  The terminal according to claim 1, further comprising reception circuitry, which, in operation, receives information on communication duration of the signal, from the first access point.

4.  The terminal according to claim 1, wherein
    the transmission circuitry transmits information for identifying the terminal connected to the second access point, to the first access point.

5.  The terminal according to claim 1, wherein
    the transmission circuitry transmits the information on the received quality to the first access point when a fluctuation of the received quality is greater than or equal to a threshold value.

6.  The terminal according to claim 1, wherein
    the transmission circuitry transmits information on the second access point to the first access point when the second access point is detected.

7.  The terminal according to claim 6, further comprising reception circuitry, which, in operation, receives information on a third access point from the first access point, wherein
    the transmission circuitry transmits, to the first access point, the information on the received quality of an access point different from the third access point among a plurality of the second access points.

8.  The terminal according to claim 6, wherein

the information on the second access point includes information used for wired communication between the first access point and the second access point.

9. An access point that is a first access point, the access point comprising:

   reception circuitry, which, in operation, receives, from a first terminal connected to the first access point, information on received quality based on a signal from at least one of a second access point and/or a second terminal connected to the second access point; and
   control circuitry, which, in operation, sets communication for the first terminal based on the information.

10. A communication method, comprising:

    measuring, by a first terminal, received quality based on a signal from at least one of a certain access point different from a first access point of a connection destination and referred to as a second access point, and/or a second terminal connected to the second access point; and
    transmitting, by the first terminal, information on the received quality to the first access point.

11. A communication method, comprising:

    receiving, by a first access point, from a first terminal connected to the first access point, information on received quality based on a signal from at least one of a second access point and/or a second terminal connected to the second access point; and
    setting, by the first access point, communication for the first terminal based on the information.

FIG. 1

FIG. 2

| Element ID | Length | Element ID Extension | Information |
|------------|--------|----------------------|-------------|
| 1 | 1 | 0 or 1 | variable |

Octets:

FIG. 3

EP 4 307 759 A1

| Element | Element ID | Element ID Extension | Extensible |
|---|---|---|---|
| Power Capability (see 9.4.2.15) | 33 | N/A | |
| TPC Request (see 9.4.2.16) | 34 | N/A | |
| TPC Report (see 9.4.2.17) | 35 | N/A | |
| Supported Channels (see 9.4.2.18) | 36 | N/A | |
| Channel Switch Announcement (see 9.4.2.19) | 37 | N/A | |
| Measurement Request (see 9.4.2.21) | 38 | N/A | Subelements, for formats using 9.4.2.21.4 to 9.4.2.21.12. |
| Measurement Report (see 9.4.2.22) | 39 | N/A | Subelements, for formats using 9.4.2.22.4 to 9.4.2.22.11. |
| Quiet (see 9.4.2.23) | 40 | N/A | |
| IBSS DFS (see 9.4.2.24) | 41 | N/A | |
| ERP (see 9.4.2.12) | 42 | N/A | Yes |
| TS Delay (see 9.4.2.32) | 43 | N/A | |
| TCLAS Processing (see 9.4.2.33) | 44 | N/A | |
| HT Capabilities (see 9.4.2.56) | 45 | N/A | Yes |
| QoS Capability (see 9.4.2.35) | 46 | N/A | |
| Reserved | 47 | | |
| RSN (see 9.4.2.25) | 48 | N/A | Yes |
| Reserved | 49 | | |
| . . . | | | |
| Reserved | 207–220 | | |
| Vendor Specific (see 9.4.2.26) | 221 | N/A | |
| Reserved | 222–254 | | |

FIG. 4

20

| Element ID | Length | Measurement Token | Measurement Request Mode | Measurement Type | Measurement Request |
|---|---|---|---|---|---|
| Octets: 1 | 1 | 1 | 1 | 1 | variable |

## FIG. 5

| Name | Measurement type |
|---|---|
| Basic | 0 |
| Clear Channel Assessment (CCA) | 1 |
| Receive Power Indication (RPI) Histogram | 2 |
| Channel Load | 3 |
| Noise Histogram | 4 |
| Beacon | 5 |
| Frame | 6 |
| STA Statistics | 7 |
| LCI | 8 |
| Transmit Stream/Category Measurement | 9 |
| Multicast Diagnostics | 10 |
| Location Civic | 11 |
| Location Identifier | 12 |
| Directional Channel Quality | 13 |
| Directional Measurement | 14 |
| Directional Statistics | 15 |
| Fine Timing Measurement Range | 16 |
| Reserved | 17–254 |
| Measurement Pause | 255 |

## FIG. 6

FIG. 7

| Subelement ID | Name | Extensible |
|---|---|---|
| 0 | SSID | |
| 1 | Beacon Reporting | Yes |
| 2 | Reporting Detail | Yes |
| 3–9 | Reserved | |
| 10 | Request | |
| 11 | Extended Request | |
| 12–50 | Reserved | |
| 51 | AP Channel Report | |
| 52–162 | Reserved | |
| 163 | Wide Bandwidth Channel Switch | Yes |
| 164–220 | Reserved | |
| 221 | Vendor Specific | |
| 222–255 | Reserved | |

FIG. 8

| | Reporting Condition | Threshold/Offset Reference |
|---|---|---|
| Octets: | 1 | 1 |

FIG. 9

| Element ID | Length | Measurement Token | Measurement Report Mode | Measurement Type | Measurement Report |
|---|---|---|---|---|---|
| Octets: 1 | 1 | 1 | 1 | 1 | variable |

FIG. 10

EP 4 307 759 A1

| Name | Measurement Type |
|---|---|
| Basic | 0 |
| CCA | 1 |
| RPI Histogram | 2 |
| Channel Load | 3 |
| Noise Histogram | 4 |
| Beacon | 5 |
| Frame | 6 |
| STA Statistics | 7 |
| LCI | 8 |
| Transmit Stream/Category Measurement | 9 |
| Multicast Diagnostics | 10 |
| Location Civic | 11 |
| Location Identifier | 12 |
| Directional Channel Quality | 13 |
| Directional Measurement | 14 |
| Directional Statistics | 15 |
| Fine Timing Measurement Range | 16 |
| Reserved | 17–255 |

FIG. 11

25

| Operating Class | Channel Number | Actual Measurement Start Time | Measurement Duration | Reported Frame Information |
|---|---|---|---|---|
| Octets:  1 | 1 | 8 | 2 | 1 |

| RCPI | RSNI | BSSID | Antenna ID | Parent TSF | Optional Subelements |
|---|---|---|---|---|---|
| Octets:  1 | 1 | 6 | 1 | 4 | variable |

FIG. 12

| Subelement ID | Name | Extensible |
|---|---|---|
| 0 | Reserved | |
| 1 | Reported Frame Body | |
| 2–162 | Reserved | |
| 163 | Wide Bandwidth Channel Switch | Yes |
| 164-220 | Reserved | |
| 221 | Vendor Specific | |
| 222–255 | Reserved | |

FIG. 13

| L-STF | L-LTF | L-SIG | RL-SIG | U-SIG | EHT-SIG | ··· | EHT-LTF | ··· |

| ··· | PHY version identifier | DL/UL | BSS color | TXOP duration | Band width | ··· | common | user-specific field |

| RU Allocation | Center 26-tone RU | CRC | Tail |

FIG. 14

EP 4 307 759 A1

<u>100</u>

```
       ∽11                    ∽12
┌──────────────┐      ┌──────────────┐
│              │      │              │
│  CONTROLLER  │◄────►│   RECEIVER   │
│              │      │              │
└──────────────┘      └──────────────┘
```

FIG. 15

<u>200</u>

```
       ∽21                    ∽22
┌──────────────┐      ┌──────────────┐
│              │      │              │
│  CONTROLLER  │◄────►│ TRANSMITTER  │
│              │      │              │
└──────────────┘      └──────────────┘
```

FIG. 16

100

FIG. 17

FIG. 18

FIG. 19

FIG. 20

EP 4 307 759 A1

| AP1 Request | AP2 Request | ... | APn Request |
|---|---|---|---|

| Operating Class | Channel Number | OBSS-AP-ID | Start Timing | Measurement Duration | Threshold |
|---|---|---|---|---|---|

**FIG. 21**

| SubelementID (3) | Length | Start Timing | Measurement Duration | OBSS-AP-ID | Threshold |
|---|---|---|---|---|---|

**FIG. 22**

| AP1 Report | AP2 Report | · · · | APn Report |
|---|---|---|---|

| RCPI | number of STA | OBSS-STA-ID | · · · | OBSS-STA-ID |
|---|---|---|---|---|

FIG. 23

| SubelementID (3) | Length | OBSS–STA–ID1 | · · · | OBSS–STA–IDn |
|---|---|---|---|---|

FIG. 24

FIG. 25

FIG. 26

FIG. 27

| BSS ID | BSS color | IP address |
|--------|-----------|------------|

FIG. 28

| AP1<br>Info | AP2<br>Info | · · · | APn<br>Info |
|-------------|-------------|-------|-------------|

| BSS ID | BSS color |
|--------|-----------|

FIG. 29

## INTERNATIONAL SEARCH REPORT

| International application No. |
| --- |
| **PCT/JP2022/002519** |

| **A. CLASSIFICATION OF SUBJECT MATTER** |
| --- |
| *H04W 24/10*(2009.01)i; *H04W 92/20*(2009.01)i; *H04W 28/16*(2009.01)i; *H04W 84/12*(2009.01)i<br>FI:　H04W24/10; H04W92/20; H04W28/16; H04W84/12 |
| According to International Patent Classification (IPC) or to both national classification and IPC |

| **B. FIELDS SEARCHED** |
| --- |
| Minimum documentation searched (classification system followed by classification symbols)<br>　　H04B7/24-7/26; H04W4/00-99/00 |
| Documentation searched other than minimum documentation to the extent that such documents are included in the fields searched<br>　　Published examined utility model applications of Japan 1922-1996<br>　　Published unexamined utility model applications of Japan 1971-2022<br>　　Registered utility model specifications of Japan 1996-2022<br>　　Published registered utility model applications of Japan 1994-2022 |
| Electronic data base consulted during the international search (name of data base and, where practicable, search terms used) |

| **C.** | **DOCUMENTS CONSIDERED TO BE RELEVANT** | |
| --- | --- | --- |
| Category* | Citation of document, with indication, where appropriate, of the relevant passages | Relevant to claim No. |
| X | HAN, Jong-Hun (SAMSUNG). Coordinated SR for Uplink. IEEE 802.11-20/1040r2. IEEE. Internet<URL:https://mentor.ieee.org/802.11/dcn/20/11-20-1040-02-00be-coordinated-sr-for-uplink.pptx>, 14 December 2020<br>　　in particular, slides 2-4 | 1, 2, 6, 8-11 |
| Y | | 3-5 |
| A | | 7 |
| Y | WO 2019/155753 A1 (SONY CORP) 15 August 2019 (2019-08-15)<br>　　paragraphs [0030]-[0051] | 3-5 |

☐ Further documents are listed in the continuation of Box C.　☑ See patent family annex.

| | | |
| --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 April 2022** | **26 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/002519**

| Patent document cited in search report | Publication date (day/month/year) | Patent family member(s) | Publication date (day/month/year) |
|---|---|---|---|
| WO 2019/155753 A1 | 15 August 2019 | US 2020/0367156 A1 paragraphs [0036]-[0057] CN 111684833 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021040223 A